# EUROPÄISCHE PATENTSCHRIFT

(11) **EP 1 212 260 B1**
(45) Veröffentlichungstag und Bekanntmachung des Hinweises auf die Patenterteilung: **03.09.2003**
(21) Anmeldenummer: 00947911.4
(22) Anmeldetag: 03.07.2000
(51) Int. Cl.: C01F 7/44, B01J 6/00, B01J 8/14

(54) **VORRICHTUNG ZUM THERMISCHEN BEHANDELN KÖRNIGER FESTSTOFFE**
DEVICE FOR THERMALLY TREATING GRANULAR SOLID MATTER
DISPOSITIF POUR LE TRAITEMENT THERMIQUE DE MATIERES SOLIDES EN GRAINS

(30) Priorität: 17.09.1999 DE 19944778
(43) Veröffentlichungstag der Anmeldung: 12.06.2002
(73) Patentinhaber: Outokumpu Oyj, 02200 Espoo (FI)
(72) Erfinder: STOLARSKI, Eberhard DI, (DE); HIRSCH, Martin, D-61381 Friedrichsdorf (DE); ORTH, Dr. Andreas, D-61381 Friedrichsdorf (DE); SCHMIDT, Hans-Werner, D-60599 Frankfurt am Main (DE); STOCKHAUSEN, Werner, D-61118 Bad Vilbel (DE)
(74) Vertreter: KEIL & SCHAAFHAUSEN
(86) Internationale Anmeldenummer: EP0006174
(87) Internationale Veröffentlichungsnummer: WO01021530

(56) Entgegenhaltungen:
- DE-A- 19 542 309
- GB-A- 2 019 369
- US-A- 3 752 455
- US-A- 5 616 303
- DATABASE WPI Section Ch, Week 199424 Derwent Publications Ltd., London, GB; Class J09, AN 1994-198367 XP002152134 & SU 1 806 309 A (PRIMORSK BOR PRODN ASSOC), 30. März 1993 (1993-03-30)

## Beschreibung

Die Erfindung betrifft eine Vorrichtung gemäß dem Oberbegriff des Patentanspruchs 1 sowie ein Verfahren gemäß dem Oberbegriff des Anspruchs 6.

In der DE 195 42 309 A1 (WO 97/18165 A1) wird ein Verfahren zum thermischen Behandeln von Aluminiumhydroxid beschrieben, bei dem das Aluminiumhydroxid zunächst in zwei Suspensionsvorwärmern vorgewärmt und anschließend in einem zirkulierenden Wirbelschichtreaktor bei einer Temperatur von 850 bis 1000°C weiter entwässert wird, bevor der so thermisch behandelte Feststoff in einem mehrstufigen Suspensionskühler unter Aufheizung von Sekundärgas abgekühlt wird. Ein einfacheres, aber grundsätzlich ähnliches Verfahren ist auch aus der GB 2 019 369 A1 bekannt. Bei beiden Verfahren erfolgt die Einstellung der notwendigen Temperaturen durch Verbrennung von Brennstoff in dem Reaktor. Femer ist beiden Verfahren gemeinsam, dass die Reaktion in einem vertikalen Reaktor sowie die Abtrennung des thermisch behandelten Feststoffs von den Prozessgasen in einem von dem Reaktor getrennten Zyklon erfolgt.

Die US 5,616,303 beschreibt ein eine zylindrische Reaktionskammer und eine Gas/Feststoff-Trennvorrichtung aufweisendes Reaktionsgefäß zum thermischen Behandeln von heißen Feststoffen mit einem seitlichen Eintritt für eine Mischung aus Gas und Feststoff, wobei die Trenneinvorrichtung entlang der zentralen Achse innerhalb der Reaktionskammer angeordnet ist. Die Mischung aus Gasen und Feststoffen tritt über die Eintrittsöffnung tangential in die Reaktionskammer ein. Während die Gase das Reaktionsgefäß über einen axial austretenden ersten Auslass verlassen, tritt der Feststoff durch einen seitlichen Auslass an dem dem Eintritt gegenüberliegenden Ende des Reaktionsgefäßes aus.

Apparaturen dieser Art sind bekannt und z. B. in WO 97/18165 A1 und GB 2 019 369 beschrieben, wobei man Aluminiumoxid aus Aluminiumhydroxid erzeugt. WO 97/18165 schlägt für den Reaktor eine zirkulierende Wirbelschicht vor und gemäß GB 2 019 369 A1 ist der Reaktor röhrenförmig mit senkrechter Achse ausgebildet.

Der Erfindung liegt die Aufgabe zugrunde, die eingangs genannte Vorrichtung in apparativ einfacher Weise auszuführen und dabei auch mit möglichst geringer Bauhöhe der Anlage auskommen zu können.

Erfindungsgemäß gelingt dies dadurch, daß der Reaktor als etwa zylindrischer, liegender Zyklon mit einer etwa horizontalen Symmetrie- und Wirbelachse ausgebildet ist, wobei man in einen Eintrittsbereich des Reaktors Brennstoff, Feststoffe und Gase in den Reaktor leitet und von einem Austrittsbereich des Reaktors, der dem Eintrittsbereich im horizontalen Abstand etwa gegenüber liegt, Feststoffe und heißes Abgas abzieht.

Es ist zweckmäßig, wenn dem Reaktor mindestens ein Vorwärmzyklon vorgeschaltet ist. In diesem Fall kann man die Vorwärmung der Feststoffe in mindestens einem Zyklon mit Abgas aus dem Reaktor vorzunehmen, wobei man das gebrauchte Abgas durch eine tauchrohrartig im Zyklon angeordnete Ableitung abzieht. Die tauchrohrartige

Der Erfindung liegt die Aufgabe zugrunde, eine apparativ einfache thermische Behandlung von körnigen Feststoffen zu ermöglichen, die insbesondere mit einer Vorrichtung geringer Bauhöhe durchgeführt werden kann.

Erfindungsgemäß wird diese Aufgabe durch eine Vorrichtung mit den Merkmalen des Patentanspruchs 1 sowie durch ein Verfahren gemäß Patentanspruch 6 gelöst.

Es ist zweckmäßig, wenn dem Reaktor mindestens ein Vorwärmzyklon vorgeschaltet ist. In diesem Fall kann man die Vorwärmung der Feststoffe in mindestens einem Zyklon mit Abgas aus dem Reaktor vorzunehmen, wobei man das gebrauchte Abgas durch eine tauchrohrartig im Zyklon angeordnete Ableitung abzieht. Die tauchrohrartige

Ableitung erspart Bauhöhe und kann gleichzeitig zum Fixieren des Zyklons dienen.

Es ist zweckmäßig, dem Reaktor eine Kühleinrichtung nachzuschalten und dabei die aus dem Reaktor abgezogenen Feststoffe im direkten Kontakt mit O₂-haltigem Gas zu kühlen und das dabei erwärmte O₂-haltige Gas in den Reaktor zu leiten, wo es für die Verbrennung gebraucht wird.

Der Reaktor kann der thermischen Behandlung verschiedenartiger Feststoffe dienen, nur beispielsweise seien hier Aluminiumhydroxid genannt, das zu Aluminiumoxid umgewandelt wird. Ferner kommen z. B. Carbonate infrage, aus denen man CO₂ thermisch austreibt, um Oxide zu gewinnen. Üblicherweise wird man dafür sorgen, daß mindestens 50 Gew.-% der dem Reaktor zugeführten Feststoffe eine Verweilzeit von mindestens 5 Sekunden im Reaktor haben, wobei ihre Aufheizung auf die jeweils erforderliche Temperatur erfolgt. Um eine Verlängerung der Verweilzeit zu erreichen, ist es zweckmäßig, das heiße Abgas aus dem Reaktor durch eine Austrittsleitung abzuziehen, die tauchrohrartig um eine Länge T vom 0,03- bis 0,2-fachen der horizontalen Gesamtlänge des Reaktors in dessen Innenraum hinein vorspringt. Diese tauchrohrartige Ableitung sorgt für zusätzliche Verwirbelung im Gas, wodurch dessen Verweilzeit und damit auch die Verweilzeit der Feststoffe im Reaktor verlängert wird.

Ausgestaltungsmöglichkeiten der Vorrichtung werden mit Hilfe der Zeichnung erläutert. Es zeigt:
- Fig. 1: eine Variante der Vorrichtung in Ansicht,
- Fig. 2: einen vertikalen Längsschnitt durch den Reaktor in schematischer Darstellung,
- Fig. 3: einen Schnitt nach der Linie III-III in Fig. 2 durch den Eintrittsbereich des Reaktors der Fig. 2 und
- Fig. 4: einen Schnitt nach der Linie IV-IV durch den Austrittsbereich des Reaktors der Fig. 2.

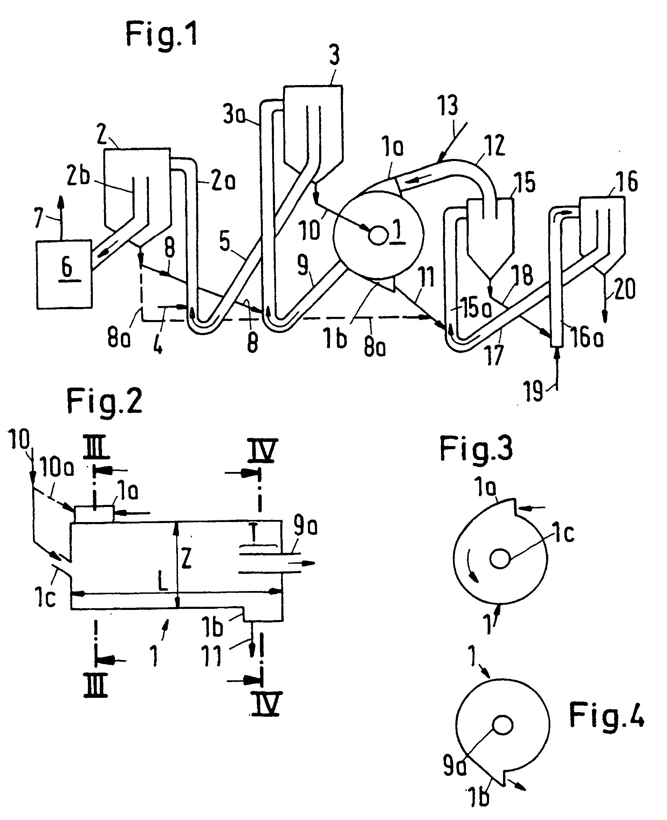

Die Anlage gemäß Fig. 1 weist als Kernstück den Reaktor (1) auf, der etwa die Form eines liegenden Zylinders mit horizontaler Symmetrie- und Wirbelachse hat. Die beiden Vorwärmstufen bestehen aus den Zyklonen (2) und (3) mit zugehörigen Steigleitungen (2a) und (3a), denen man Feststoffe jeweils im Fußbereich zuführt. Die zu behandelnden Feststoffe, z. B. Aluminiumhydroxid, speist man durch die Leitung (4) in die Steigleitung (2a) ein, wo sie mit Hilfe von heißem Gas aus der Leitung (5) pneumatisch in den Zyklon (2) transportiert werden. Das Abgas verläßt den Zyklon (2) durch die Leitung (2b), die innerhalb des Zyklons (2) abwärts geführt ist und in einer Gasreinigung (6) mündet. Die Gasreinigung kann z. B. als Naßwäsche oder Elektrofilter ausgestaltet sein; gereinigtes Gas zieht in der Leitung (7) ab. Die Anzahl der Vorwärmstufen kann in der Praxis beliebig gewählt werden.

Im Zyklon (2) angewärmte Feststoffe verlassen diesen durch die Leitung (8) und werden zum Fuß der Steigleitung (3a) geführt. Heißes Abgas aus dem Reaktor (1), welches in der Leitung (9) herangeführt wird, transportiert die Feststoffe zum Zyklon (3), und vorgewärmte Feststoffe werden durch die Leitung (10) dem Reaktor (1) zugeführt. Abgas verläßt den Zyklon (3) abwärts strömend in der Leitung (5) und wird der ersten Vorwärmstufe zugeführt. Bei Bedarf kann man einen Teil der vom Zyklon (2) kommenden Feststoffe unter Umgehung des heißen Bereichs der Anlage durch die gestrichelte Leitung (8a) den heißen Feststoffen der Leitung (11) zumischen.

Durch die Leitung (12) führt man dem Reaktor (1) vorgewärmtes, O₂-haltiges Gas (z. B. Luft) zu, gleichzeitig kommt Brennstoff aus der Leitung (13). Um die Aschenproduktion im Reaktor (1) niedrig zu halten, verwendet man üblicherweise gasförmigen Brennstoff, z. B. Erdgas. Üblicherweise setzt die Verbrennung des Brennstoffs mit dem O₂-haltigen Gas bereits am Gaseintritt (1a) des Reaktors (1) ein, dann bildet sich im Reaktor (1) im Eintrittsbereich eine Rotationsströmung mit horizontaler Wirbelachse aus; Einzelheiten werden weiter unten mit Hilfe der Fig. 2 bis 4 erläutert.

Das heiße Feststoff-Produkt verläßt den Reaktor (1) durch den Auslaß (1b) und wird durch die Leitung (11) der Kühlung zugeführt. Ebenso wie die Vorwärmung kann die Kühlung in einer oder mehreren Stufen erfolgen. Im vorliegenden Fall sind zwei Kühlstufen dargestellt, zu denen die Zyklone (15) und (16) und die zugehörigen Steigleitungen (15a) und (16a) gehören. Relativ kaltes, O₂-haltiges Gas wird durch die Leitung (17) zum Fuß der Steigleitung (15a) geführt, wo es das Feststoff-Produkt aus der Leitung (11) in den Zyklon (15) fördert. Das Gas verläßt den Zyklon (15) durch die Leitung (12), und die teilweise gekühlten Feststoffe gelangen durch die Leitung (18) zum Fuß der Steigleitung (16a). Dieser Steigleitung (16a) führt man durch die Leitung (19) relativ kaltes O₂-haltiges Gas, z. B. Umgebungsluft, zu und fördert die Feststoffe pneumatisch in den Zyklon (16). Das Gas verläßt dann den Zyklon (16) durch die Leitung (17), und gekühlte Feststoffe werden in der Leitung (20) abgezogen. Selbstverständlich ist die Zahl der Kühlstufen beliebig wählbar.

Die Fig. 2 bis 4 zeigen Einzelheiten des Reaktors (1) mit dem Gaseinlaß (1a), einem Feststoff-Eintritt (1c), einem Gasauslaß (9a) und dem Feststoff-Auslaß (1b). Die vorgewärmten Feststoffe werden in der Leitung (10) herangeführt und etwa zentral durch den Einlaß (1c) in den Eintrittsbereich des Reaktors (1) geführt, wo sie von den Verbrennungsgasen erfaßt werden, die vom Gaseintritt (1a) kommen. Es ist möglich, die Feststoffe aus der Leitung (10) ganz oder teilweise durch die gestrichelt eingezeichnete Leitung (10a) auch durch den Eintritt (1a) dem Reaktor (1) zuzuführen.

Es empfiehlt sich, insbesondere durch die Wahl der Länge L und des Durchmessers Z des Reaktors (1) dafür zu sorgen, daß mindestens 50 Gew.-% der dem Reaktor zugeführten Feststoffe eine Verweilzeit von mindestens 5 Sekunden und vorzugsweise mindestens 7 Sekunden im Reaktor haben. Die Austrittsleitung (9a) ist vorzugsweise um eine Länge T tauchrohrartig in das Innere des Reaktors hinein vorspringend ausgebildet. Dadurch ergeben sich günstige Strömungsbedingungen, welche die Verweilzeiten im Reaktor verlängern. Die Länge T beträgt vorzugsweise das 0,03- bis 0,2-fache der Reaktorlänge L. Eine vorteilhafte Ausgestaltung besteht darin, daß die Drallzahl, die das Verhältnis von Axialimpuls zu Drehimpuls unter Berücksichtigung des Feststoffimpulses und des Quotienten von Ein- und Austrittstemperatur ist, größer als 1,5 ist.

## Patentansprüche

1. Vorrichtung zum thermischen Behandeln von körnigen Feststoffen zum Ausführen endothermer Reaktionen, wobei aus den Feststoffen CO₂ und/oder Wasser abgespalten wird, mit einem Reaktor (1), der als etwa zylindrischer, liegender Zyklon mit einer etwa horizontalen Symmetrie- und Wirbelachse ausgebildet ist, wobei der Reaktor einen Eintrittsbereich (1a, 1c) zur Zufuhr von Brennstoff, Feststoffen und Gasen in den Reaktor (1) und einen Austrittsbereich (1b) zur Abfuhr von Feststoffen und heißem Abgas aufweist, wobei der Austrittsbereich (1b) dem Eintrittsbereich (1a, 1c) im horizontalen Abstand etwa gegenüber liegt, und wobei man dem Reaktor Brennstoff, 02-haltiges Gas und vorgewärmte Feststoffe zuführt, den Brennstoff zum Erzeugen von Verbrennungsgas mit Temperaturen im Bereich von 600 bis 1500°C im Reaktor verbrennt, die Feststoffe im Reaktor in wirbelnden Kontakt mit den Verbrennungsgasen bringt, heißes Abgas aus dem Reaktor zum Vorwärmen der Feststoffe verwendet, aus dem Reaktor Feststoffe mit Temperaturen im Bereich von 400 bis 1200°C abzieht und das O₂-haltige Gas mit den heißen Feststoffen vorwärmt, **dadurch gekennzeichnet, dass** der Reaktor (1) eine tauchrohrartig in den Innenraum des Reaktors (1) hinein vorspringende Austrittsleitung (9a) zum Abziehen von heißem Abgas aufweist.

2. Vorrichtung nach Anspruch 1, **dadurch gekennzeichnet, dass** dem Reaktor (1) mindestens ein Vorwärmzyklon (2, 3) vorgeschaltet ist.

3. Vorrichtung nach Anspruch 1 oder 2, **dadurch gekennzeichnet, dass** dem Reaktor (1) mindestens eine Kühleinrichtung (15, 16) nachgeschaltet ist, in welcher vom Reaktor (1) abgezogene Feststoffe im direkten Kontakt mit O₂-haltigem Gas gekühlt werden.

4. Vorrichtung nach einem der vorhergehenden Ansprüche, **dadurch gekennzeichnet, dass** die Austrittsleitung um eine Länge T vom 0,03- bis 0,2-fachen der horizontalen Gesamtlänge L des Reaktors in dessen Innenraum hinein vorspringt.

5. Vorrichtung nach einem der vorhergehenden Ansprüche, **dadurch gekennzeichnet, dass** am Reaktor (1) die Feststoffzufuhröffnung (1a) am Reaktorumfang dem Feststoffabzug (1b) gegenüberliegend angeordnet ist.

6. Verfahren zum thermischen Behandeln von körnigen Feststoffen zum Ausführen endothermer Reaktionen, wobei aus den Feststoffen CO₂ und/oder Wasser abgespalten wird, wobei man einem Reaktor Brennstoff, O₂-haltiges Gas und vorgewärmte Feststoffe zuführt, den Brennstoff zum Erzeugen von Verbrennungsgas bei Temperaturen im Bereich von 600 bis 1500°C in dem Reaktor verbrennt, die Feststoffe im Reaktor in wirbelnden Kontakt mit den Verbrennungsgasen bringt, heißes Abgas aus dem Reaktor zum Vorwärmen der Feststoffe verwendet, aus dem Reaktor Feststoffe mit Temperaturen im Bereich von 400 bis 1200°C abzieht und das O₂-haltige Gas mit den heißen Feststoffen vorwärmt, **dadurch gekennzeichnet, dass** man den Brennstoff, die Feststoffe und die Gase in einen Eintrittsbereich des Reaktors, der als etwa zylindrischer, liegender Zyklon mit einer etwa horizontalen Symmetrie- und Wirbelachse ausgebildet ist, leitet und die Feststoffe und das heiße Abgas von einem Austrittsbereich des Reaktors, der dem Eintrittsbereich im horizontalen Abstand etwa gegenüber liegt, abzieht.

7. Verfahren nach Anspruch 6, **dadurch gekennzeichnet, dass** man die Feststoffe vor Einbringen in den Reaktor vorwärmt.

8. Verfahren nach Anspruch 6 oder 7, **dadurch gekennzeichnet, dass** man die von dem Reaktor abgezogenen Feststoffe im direkten Kontakt mit O₂-haltigem Gas abkühlt.

## Claims

1. An apparatus for the thermal treatment of granular solids for performing endothermic reactions, wherein CO₂ and/or water is split off from the solids, comprising a reactor (1) formed as an approximately cylindrical, lying cyclone with an approximately horizontal axis of symmetry and swirling, wherein the reactor comprises an inlet area (1a, 1c) for supplying fuel, solids and gas into the reactor (1), and an outlet area (1b) for discharging solids and hot exhaust gas, wherein the outlet area (1b) is disposed approximately opposite the inlet area (1a, 1c) with a horizontal distance, and wherein fuel, O₂-containing gas and preheated solids are supplied to the reactor, wherein the fuel is burnt in the reactor to produce combustion gas with temperatures in the range from 600 to 1500°C, the solids in the reactor are brought in fluidizing contact with the combustion gases, hot exhaust gas from the reactor is used for preheating the solids, solids are withdrawn from the reactor with temperatures in the range from 400 to 1200°C and the O₂-containing gas is preheated by means of the hot solids, **characterized in that** the reactor (1) has a discharge line (9a) for withdrawing hot exhaust gas which discharge line protrudes into the interior of the reactor (1) in the manner of a submerged tube.

2. The apparatus as claimed in claim 1, **characterized in that** at least one preheating cyclone (2, 3) is disposed before the reactor (1).

3. The apparatus as claimed in claim 1 or 2, **characterized in that** at least one cooling means (15, 16) is disposed subsequent to the reactor (1), in which cooling means solids withdrawn from the reactor (1) are cooled in direct contact with O₂-containing gas.

4. The apparatus as claimed in any of the preceding claims, **characterized in that** the discharge protrudes into the interior of the reactor by a length T of 0.03 to 0.2 times the entire horizontal length L of the reactor.

5. The apparatus as claimed in any of the preceding claims, **characterized in that** the solids inlet opening (1a) of the reactor (1) is disposed at the periphery of the reactor opposite the solids outlet (1b).

6. A method for the thermal treatment of granular solids for performing endothermic reactions, wherein CO₂ and/or water is split off from the solids, wherein fuel, O₂-containing gas and preheated solids are supplied to a reactor, wherein the fuel is burnt in the reactor to produce combustion gas with temperatures in the range from 600 to 1500°C, the solids in the reactor are brought in fluidizing contact with the combustion gases, hot exhaust gas from the reactor is used for preheating the solids, solids are withdrawn from the reactor with temperatures in the range from 400 to 1200°C and the O₂-containing gas is preheated by means of the hot solids, **characterized in that** the fuel, the solids and the gases are supplied to an inlet area of the reactor which is formed as an approximately cylindrical, lying cyclone with an approximately horizontal axis of symmetry and swirling, and wherein the solids and the hot exhaust gas are withdrawn from an outlet area of the reactor disposed approximately opposite the inlet area with a horizontal distance.

7. The method as claimed in claim 6, **characterized in that** the solids are preheated before being supplied to the reactor.

8. The method as claimed in claim 6 or 7, **characterized in that** the solids withdrawn from the reactor are cooled in direct contact with O₂-containing gas.

## Revendications

1. Dispositif pour le traitement thermique de matières solides en grain pour la réalisation de réactions endothermiques, du CO₂ et / ou de l'eau étant dégagé des matières solides, avec un réacteur (1) qui a la forme d'un cyclone couché approximativement cylindrique ayant un axe de symétrie et de tourbillon approximativement horizontal, le réacteur étant muni d'une zone d'entrée (1a, 1c) pour l'introduction de combustible, de matières solides et de gaz dans le réacteur (1) et d'une zone de sortie (1b) pour l'évacuation des matières solides et des gaz d'échappement brûlants, la zone de sortie (1b) étant située approximativement à l'opposé horizontalement de la zone d'entrée (1a, 1c), dans lequel dispositif on introduit dans le réacteur du combustible, un gaz contenant du O2 et des matières solides préchauffées, on brûle le combustible pour dégager dans le réacteur des gaz de combustion à une température comprise entre 600 et 1 500 °C, on met les matières solides en contact tourbillonnaire dans le réacteur avec les gaz de combustion, on utilise des gaz d'échappement brûlants sortant du réacteur pour préchauffer les matières solides, on extrait les matières solides du réacteur avec des températures comprises entre 400 et 1 200 °C et on préchauffe le gaz contenant du O₂ avec les matières solides brûlantes, **caractérisé en ce que** le réacteur (1) est muni d'une conduite de sortie (9a) pénétrant comme un tube plongeur à l'intérieur de la chambre interne du réacteur (1) pour extraire les gaz d'échappement brûlants.

2. Dispositif selon la revendication 1, **caractérisé en ce qu**'au moins un cyclone de préchauffage (2, 3) est raccordé en précascade sur le réacteur (1).

3. Dispositif selon la revendication 1 ou 2, **caractérisé en ce qu**'au moins un dispositif de refroidissement (15, 16) est raccordé en aval du réacteur (1) dans lequel les matières solides extraites du réacteur (1) sont refroidies par contact direct avec le gaz contenant du O₂.

4. Dispositif selon l'une des revendications précédentes, **caractérisé en ce que** la conduite de sortie pénètre à l'intérieur de la chambre interne du réacteur (1) d'une longueur T comprise entre 0,03 et 0,2 fois la longueur horizontale totale L du réacteur.

5. Dispositif selon l'une des revendications précédentes, **caractérisé en ce que** l'ouverture d'introduction des matières solides (1a) est disposée sur la circonférence du réacteur (1) à l'opposé de la sortie des matières solides (1b).

6. Procédé pour le traitement thermique de matières solides en grain pour la réalisation de réactions endothermiques, du CO₂ et / ou de l'eau étant dégagé des matières solides, dans lequel procédé on introduit dans un réacteur du combustible, un gaz contenant du O₂ et des matières solides préchauffées, on brûle dans le réacteur le combustible pour dégager des gaz de combustion à une température comprise entre 600 et 1 500 °C, on met les matières solides en contact tourbillonnaire dans le réacteur avec les gaz de combustion, on utilise des gaz d'échappement brûlants sortant du réacteur pour préchauffer les matières solides, on extrait les matières solides du réacteur avec des températures comprises entre 400 et 1 200 °C et on préchauffe le gaz contenant du O₂ avec les matières solides brûlantes, **caractérisé en ce que** l'on conduit le combustible, les matières solides et les gaz dans une zone d'entrée du réacteur, le réacteur ayant la forme d'un cyclone couché approximativement cylindrique avec un axe de symétrie et de tourbillon approximativement horizontal, et on extrait les matières solides et les gaz d'échappement par une zone de sortie du réacteur située approximativement à l'opposé horizontalement de la zone d'entrée.

7. Procédé selon la revendication 6, **caractérisé en ce que** l'on préchauffe les matières solides avant de les introduire dans le réacteur.

8. Procédé selon la revendication 6 ou 7, **caractérisé en ce que** l'on refroidit les matières solides extraites du réacteur en les mettant en contact direct avec un gaz contenant du O₂.
